Europäisches Patentamt

European Patent Office

Office européen des brevets

(11) Publication number: **0 360 721**
A2

# EUROPEAN PATENT APPLICATION

(21) Application number: **89480110.9**

(22) Date of filing: **12.07.89**

(51) Int. Cl.5: **H 04 L 25/36**

(30) Priority: **19.09.88 US 246560**

(43) Date of publication of application:
**28.03.90 Bulletin 90/13**

(84) Designated Contracting States: **DE FR GB**

(71) Applicant: **International Business Machines Corporation
Old Orchard Road
Armonk, N.Y. 10504 (US)**

(72) Inventor: **Dang, Mieu-Hong
2100 Taylor Simonetti Avenue
Austin TX. 78728 (US)**

**James, Nigel Victor
2250 Ridgepont Drive, APT 1615
Austin TX. 78754 (US)**

**Taborga, Jorge Roberto
1802 Rainy Meadows Drive
Austin TX. 78758 (US)**

(74) Representative: **Vekemans, André
Compagnie IBM France Département de Propriété
Intellectuelle
F-06610 La Gaude (FR)**

(54) Method and apparatus for high speed asynchronous communication.

(57) A method and apparatus are disclosed for permitting high speed asynchronous data communication between two devices (22, 24) operating at dissimilar data rates. An interrupt driver (36) is provided and is utilized to place incoming data frames received at a first data rate into a buffer memory (32). After each frame of data is stored, the number of frames within the buffer memory is checked. When a selected amount of data frames have been stored within the buffer memory a universal asynchronous receiver/transmitter (34) is utilized to transmit data from the buffer memory at a second data rate. Transmission is halted whenever the number of data frames within the buffer falls below a selected level. However, when the number of empty or redundant frames within the buffer reaches a selected number, indicating the end of data transmission has occurred, all remaining data within the buffer memory is transmitted without regard to the amount of data remaining therein.

Fig. 3

**Description**

## METHOD AND APPARATUS FOR HIGH SPEED ASYNCHRONOUS COMMUNICATION

This invention relates in general to methods of high speed data communication, and in particular to methods of high speed asynchronous data communication. Still more particularly, the present invention relates to methods of high speed asynchronous data communication between two devices which operate at dissimilar data rates.

2. Background Art:

Connecting two systems together in a network is desirable in many applications, in particular in applications where it is desired to communicate between separate systems. For example, it is often desirable to provide communication between a host processor and individual work stations or between a main-frame computer and secondary storage facilities

One common method whereby multiple systems may communicate is by the utilization of a modem device. Such devices may be utilized to provide communication between a remotely located computer and a large central computer capable of simultaneously handling numerous incoming calls. Additionally, two individual micro-computers may also communicate utilizing modems by first permitting their operators to communicate directly in order to coordinate activities and select compatible parameter settings. One of the parameter setting which is generally selected by the operator or automatically selected by the modem device is the baud rate. The baud rate establishes the number of bits per second (bps) which the computers will utilize to transfer data from one device to another device.

Those skilled in the art will appreciate that early modem devices were capable of communication at a baud rate of 110 bits per second, but that in recent systems the baud rate which may be utilized to transmit and receive data has substantially increased. For example, well known modem systems are now available which will communicate at 1200 bits per second. Additionally, there are available certain high speed data communication systems, such as the ROLMphone 244PC, which are capable of conducting communication at much higher data rates. The ROLMphone 244PC, manufactured by International Business Machines Corporation, is capable of data communication at rates up to 19,200 bits per second.

Despite the increased speed at which such devices are capable of data communications, the increasingly complex and data intensive area in which such devices operate has made it desirable to enhance communication speed to the maximum extent possible. Additionally, the maximum rate at which data may be transferred by one terminal may not be identical to the maximum rate at which a receiving terminal may accept that data. To accommodate small and temporary variations in data rates, it is well known to provide buffer memory capability at the input to a modem device to permit temporary storage of data during capture of a large file to disk storage. Such buffer memory systems will not, however, accommodate any variation between data rates utilized by each terminal. Therefore, it should be obvious that a need exists for a method and apparatus whereby high speed asynchronous communication may take place between two devices having dissimilar data rates.

It is therefore one object of the present invention to provide an imprcved method and apparatus for high speed data communication.

It is another object of the present invention to provide an improved method and apparatus for high speed asynchronous data communication.

It is yet another object of the present invention to provide an improved method and apparatus for high speed asynchronous data communication between two devices which operate at dissimilar data rates.

The foregoing objects are achieved as is now described. The method and apparatus of the present invention permit high speed asynchronous data communication between two terminals which operate at dissimilar data rates. An interrupt driver is provided and is utilized to place incoming data frames received at a first data rate into a buffer memory. After each frame of data has been stored, the number of frames within the buffer is checked. After a selected number of data frames have been stored a universal asynchronous receiver/transmitter (UART) is then utilized to transmit data from the buffer memory at a second data rate. Transmission is halted whenever the number of data frames within the buffer memory falls below a selected level. In a preferred embodiment of the present invention, when the number of empty frames within the buffer memory reaches a selected number, indicating the end of data transmission has occurred, all remaining data within the buffer memory is transmitted.

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:

Figure 1 depicts a pictorial representation of a communication system which may be utilized in accordance with the method and apparatus of the present invention;

Figure 2 depicts a high level block diagram illustrating high speed data communication between two computers in accordance with the method and apparatus of the present invention;

Figure 3 depicts a high level block diagram of a communications apparatus which may be utilized in accordance with the method and apparatus of the present invention;

Figure 4 depicts a logic flow chart which illustrates the initiation of high speed communication in accordance with the method and apparatus of the present invention;

Figures 5a and 5b depict a logic flow chart illustrating the link interrupt method which may be utilized with the method and apparatus of the present invention; and

Figure 6 depicts a logic flow chart illustrating the transmit interrupt method which may be utilized in accordance with the method and apparatus of the present invention.

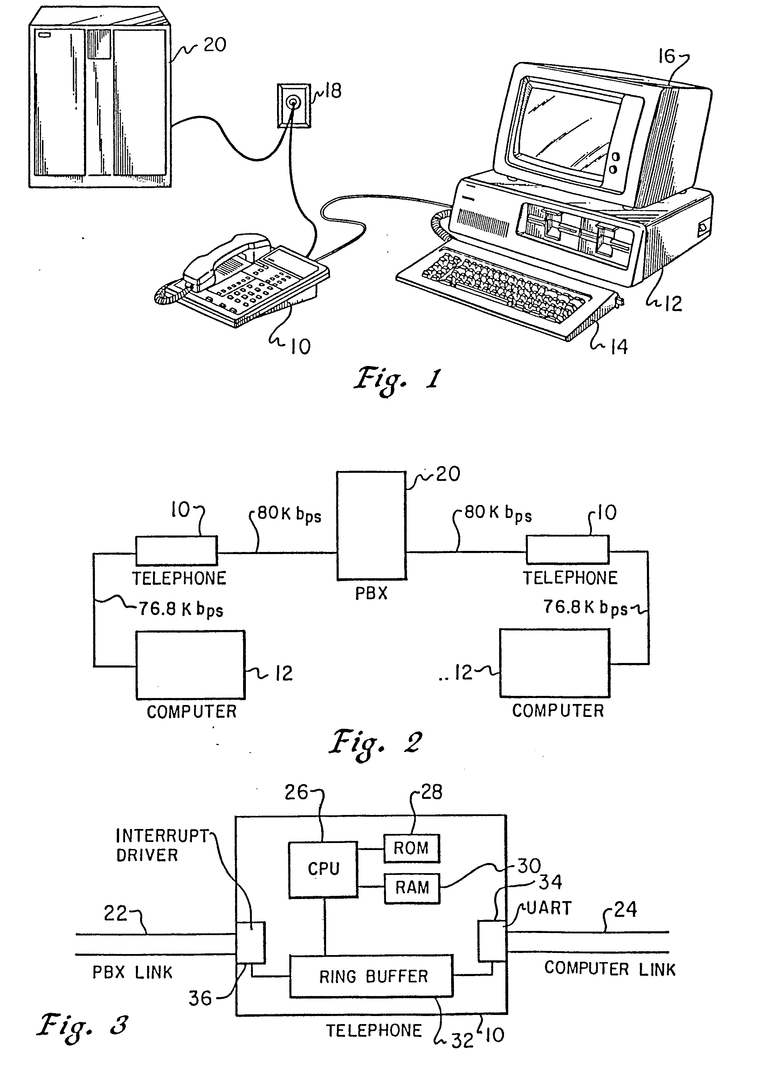

With reference now to the figures, and in particular with reference to Figure 1, there is depicted a pictorial representation of a communication system which may be utilized in accordance wit the method of the present invention. As may be seen, the communication system includes a telephone 10 which preferably permits both voice and data communication. Telephone 10 may be implemented utilizing any telephone having a data/telephony capability, such as the ROLMphone 244PC, manufactured by International Business Machines Corporation. Telephone 10 is coupled, via a standard EIA-232D cable to a serial asynchronous port within computer 12.

Computer 12 within the depicted system is preferably provided by utilizing an IBM Personal Computer, an IBM Personal System/2 or other similar system which includes an asynchronous port capable of handling the data rates disclosed herein. As those skilled in this are will appreciate, computer 12 generally includes both a keyboard 14 and a video display device 16, which may be utilized to allow operator input and to provide user discernible messages to an operator of the communication system depicted.

In the system illustrated, telephone 10 may be utilized for data communications in a manner very similar to that of a modem due to the fact that the ROLMphone 244PC will support the AT command set which is utilized in most modems. To permit such communication, telephone 10 is connected to a telecommunication system such as a Private Branch Exchange (PBX) 20 which may be implemented utilizing the ROLM Computerized Branch Exchange (CBX). This connection is preferably made via a distributed wiring system which includes a plurality of telephone outlets 18.

Referring now to Figure 2, there is depicted a high level block diagram illustrating high speed data communication between two computers in accordance with the method and apparatus of the present invention. As may be seen in the depicted block diagram, two computers 12 are each coupled to a Private Branch Exchange (PBX) 20 such as the ROLM Computerized Branch Exchange (CBX). Each computer 12 is coupled to Private Branch Exchange 20 by means of telephone 10, which, as disclosed above, may be implement ed utilizing a ROLMphone 244PC, manufactured by International Business Machines Corporation.

The ROLM Computerized Branch Exchange (CBX), which may be utilized to implement Private Branch Exchange (PBX) 20, when equipped with the appropriate bus, will support a data rate of 80K bits per second during asynchronous communication. This is the highest speed available with this device and is accomplished by transmitting or receiving a frame of data from the ROLMphone 244PC every 125 microseconds.

In previously known communication links utilizing this equipment, the communication system thus provided utilizes this excess speed to provide redundant data to ensure that accurate data has been transferred. For example, when coupled to a device capable of transmitting or receiving data at 9600 bits per second, a PBX thus equipped need only send new data every eighth frame. In this manner, seven of the frames transmitted may be blank or redundant and utilized to determine whether or not proper communication has occurred.

Those skilled in this art should appreciate that the buffering and data handling typically utilized with a Private Branch Exchange devices will not guarantee that the frame structure at the receiving end will be identical to the frame structure which was transmitted. This is due to the fact that the specifications for the link between telephone 10 and Private Branch Exchange 20 typically permit the data device to handle up to four frames of jitter. Thus, at 9600 bits per second, four data bytes could possibly arrive consecutively followed by twenty-eight empty or redundant frames.

In order to maximize the speed of communication between computer 12 and PBX 20, or between computer 12 and a second computer 12, it is necessary to accelerate the speed at which data may be coupled from computer 12 to telephone 10. Since telecommunication data rates are typically even multiples of previously known data rates, the highest possible data rate, which is an even multiple of the 19,200 bits per second speed at which the ROLMphone 244PC can operate utilizing previously known techniques, is 76.8K bits per second. 76.8K bits per second represents a data rate which is four times greater than that previously permitted with this type of equipment. As may be seen, with a maximum speed available within PBX 20 of 80K bits per second, the transmission of data between computer 12 and telephone 10 at 76.8K bits per second will provide some degree of redundancy. That is, one empty or redundant frame may be sent in every twenty frames of data.

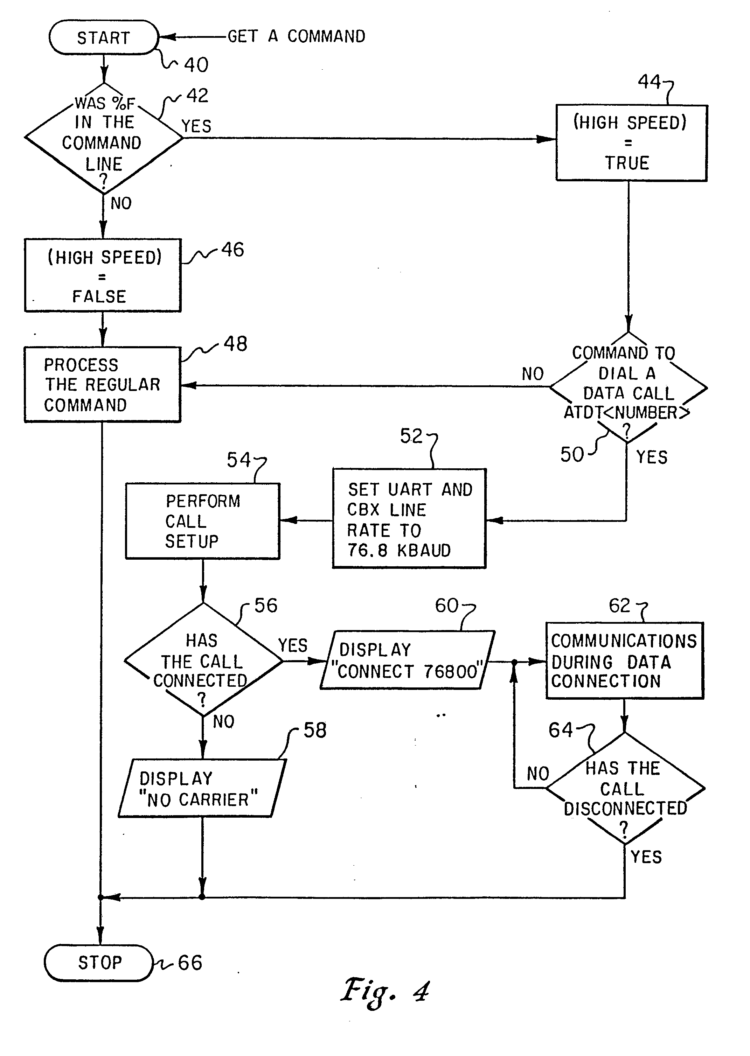

With reference now to Figure 3, there is depicted a high level block diagram of a communications apparatus within telephone 10 which may be utilized in accordance with the method and apparatus of the present invention. As can be seen, telephone 10 typically includes a Central Processing Unit 26. In the depicted embodiment of the present invention, telephone 10 is provided with a Motorola 68000 processor which is coupled, in a manner well known in the art, to memory resources 28 and 30. As illustrated, memory resource 28 is a Read-Only-Memory (ROM) and memory resource 30 is a Random-Access-Memory (RAM).

As is illustrated, Central Processing Unit 26 is coupled to ring buffer 32, which may be utilized to accommodate the variations of data rate between computer 12 and Private Branch Exchange 20. As may be seen, data received from PBX 20 is coupled to telephone 10 via PBX link 22. PBX link 22 is coupled to telephone 10 via interrupt driver 36 which is utilized to receive the data frame which arrives from PBX 20 every 125 microseconds. It should be apparent to those skilled in the art that interrupt driver 36 may be provided utilizing any circuitry which is capable of accepting the format which is utilized by the data frame of the depicted system. As each data frame is received from PBX 20 it is placed into ring buffer 32 and the number of frames within ring buffer 32 is determined.

In accordance with an important aspect of the present invention, when the number of data frames placed within ring buffer 32 reaches a predetermined level, data output is initiated from ring buffer 32. Data output from ring 32 is coupled to universal asynchronous receiver/transmitter (UART) 34. A transmit register empty interrupt signal associated with UART 34 is then enabled and data from ring buffer 32 is placed into the UART transmit register for transmittal to computer 12 by means of computer link 24.

In operation, frames of data are continually transmitted from PBX 20 into ring buffer 32 and then out to computer 12 until such time as the number of data frames within ring buffer 32 falls to a predetermined number. Once this level is reached, Central Processing Unit 26 is utilized to determine whether or not the number of empty or blank frames of data within ring buffer 32 exceeds a predetermined number. This predetermined number may be determined by examining the number of frames of jitter which are permitted in the system as this will provide an accurate indication of the highest possible number of blank frames which may occur within a continuous transmission. In the event the number of empty or blank frames within ring buffer 32 exceeds this predetermined maximum, the remaining data within ring buffer 32 is clocked out and transmitted via UART 34 to computer 12. When the number of blank or empty frames of data within ring buffer 32 does not meet or exceed the maximum number of blank frames which are permitted, the transmission from ring buffer 32 to computer 12 is temporarily halted until additional data is placed into ring buffer 32 from PBX 20.

Those skilled in the art should appreciate that by utilizing the foregoing apparatus full speed data transfer between PBX 20 and computer 12 may occur and the transmission speed associated with UART 34 will be maintained at 76.8K bits per second by transmitting a frame of data every 130.5 microseconds without missing a slot. In view of the fact that the difference between the 130.5 microseconds required to transmit a frame of data by UART 34 and the 125 microseconds necessary to transmit a frame of data between PBX 20 and telephone 10 is not dramatic, the point at which transmission must be halted out of ring buffer 32 to ensure that data is continually present for transmission on computer link 24 is quite small.

In the depicted embodiment of the present invention five frames of data are chosen for this selected level. With regard to the predetermined level of data which must be present within ring buffer 32 to permit transmission of data to be initiated, within the depicted embodiment of the present invention utilized twenty frames of data. This level need only be equal to the maximum number of empty or redundant frames which may arrive due to the jitter present in the system. In the depicted embodiment of the present invention the number of empty or redundant frames permitted is thirty. This is clearly larger than the potential number of empty frames which are possible at 76.8K bits per second where the redundancy ratio compared to 80K bits per second is one empty frame in twenty. Thus, thirty consecutive empty frames are clearly indicative of a pause in transmission during a full speed data transfer operation.

Referring now to Figure 4, there is depicted a logic flow chart which illustrates the initiation of high speed communication in accordance with the method and apparatus of the present invention. The process of the present invention begins at block 40 with the reception of a command at telephone 10 from computer 12. Block 42 illustrates the determination of whether or not a "%F" command was present in the AT command line. If so, block 44 depicts the setting of a HIGH SPEED flag to indicate that high speed communication is desired. If the "%F" command is not present, then block 46 illustrates the setting of the HIGH SPEED flag to a value indicating that high speed communications is not desired. Thereafter, block 48 illustrates the processing of the command in the normal fashion and the process terminates at block 66.

Referring again to block 44, if the HIGH SPEED flag is true, indicating that high speed data transmission is desired, then block 50 is utilized to determine whether or not the associated AT command was a command to dial a data call. If not, the command is processed in the regular manner, as illustrated in block 48 and the process again terminates, as indicated in block 66.

In the event the command received from computer 12 is a command to dial a data call and the HIGH SPEED flag is true, then block 52 is utilized to illustrate the setting of the UART and CBX line rate to 76.8K bits per second in accordance with the method and apparatus of the present invention. Block 54 is then utilized to perform call setup.

At this point, block 56 illustrates the determination of whether or not the call has been connected. If the call was not connected, block 58 depicts the displaying of a "NO CARRIER" message, indicating that the call connection has failed. In the event the call has been connected, as determined by block 56, then block 60 illustrates the displaying of the "CONNECT 76800" message, indicating that a high speed data link has been established. Next, block 62 illustrates the system providing communication during data connection at the rate of 76.8K bits per second. Finally, block 64 is utilized to determine whether or not the call has terminated or disconnected. If not, communications continues to take place as illustrated in block 62. If the call has been disconnected, then the process terminates, as illustrated in block 66.

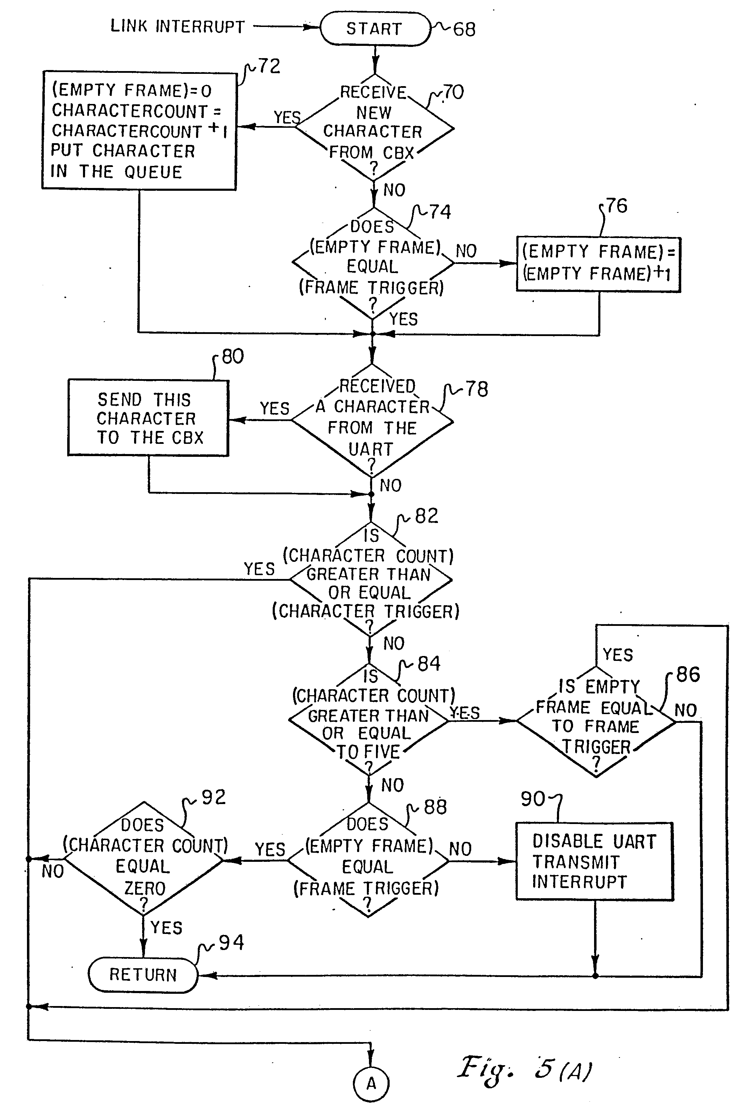

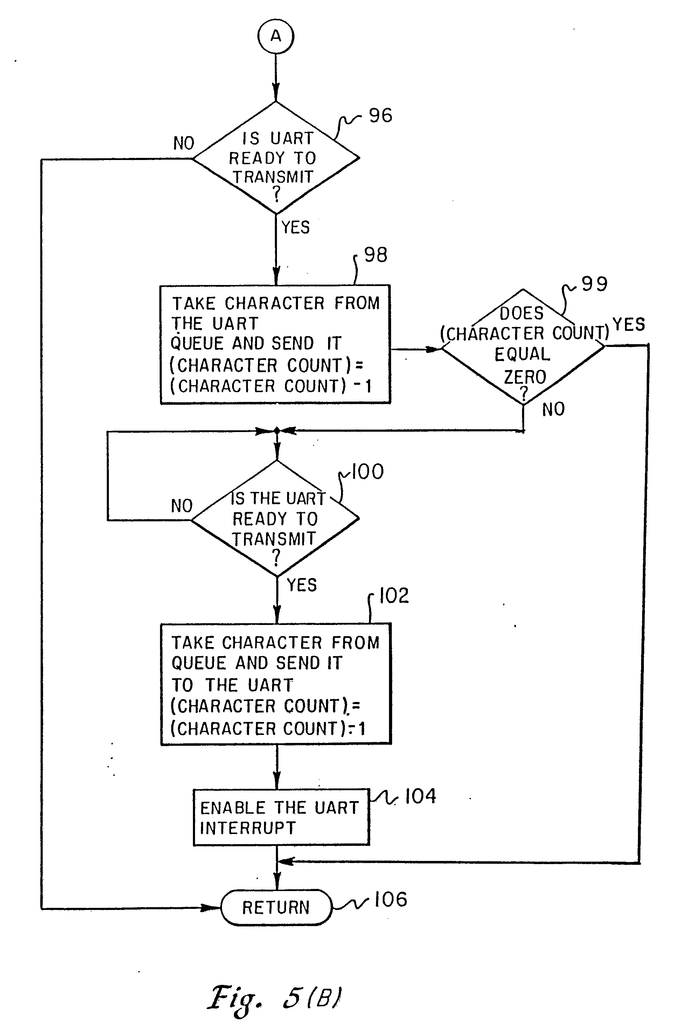

With reference now to Figures 5a and 5b, there is depicted a logic flow chart illustrating the link interrupt method which may be utilized with the method and apparatus of the present invention. As may be seen, the process beings at block 68 with the receiving of a link interrupt signal. This signal is utilized to signify the availability of PBX 20 to transmit a frame of data to ring buffer 32 via interrupt drive 36 (see Figure 3).

After receiving a link interrupt signal, block 70 is utilized to illustrate the determination of whether or not a new frame of data or "character" has been received from the Computerized Branch Exchange (CBX). If a new frame of data has been received, then the process proceeds to block 72 wherein the "EMPTY FRAME" register is set equal to zero and the "CHARACTER COUNT" value is incremented. Thereafter, the character of data is placed in the data queue within ring buffer 32 (see Figure 3). As will be explained in greater detail herein, the EMPTY FRAME value and the CHARACTER COUNT value are utilized to enhance the transfer of data in accordance with the method of the present invention.

In the event a new frame of data has not been received from the CBX, block 74 is utilized to determine whether or not the EMPTY FRAME value is equal to that value which may be utilized to indicate a cessation of data transfer. This is referred to in the depicted flow chart as the "FRAME TRIGGER" value. If not, block 76 illustrates the incrementing of the EMPTY FRAME value and the process continues.

Next, block 78 depicts the determination of whether or not a character of data has been received from computer 12 through UART 34 (see Figure 3). If a character has been received, block 80 illustrates the transmission of this character of data to the CBX. If a character of data has not been received from the UART, then block 82 is utilized to determine whether or not the CHARACTER COUNT value is greater than or equal to the "CHARACTER TRIGGER." CHARACTER TRIGGER is that level of data within ring buffer 32 which is utilized to initiate transmission of data from the CBX to the computer. In the depicted embodiment of the present invention, the CHARACTER TRIGGER value need only be a value which exceeds the minimum number of data frames within ring buffer 32 by the maximum number of empty or redundant frames which may occur within an ongoing data stream due to jitter. However, the Applicants have determined that a CHARACTER TRIGGER equal to twenty frames of data permits operation to occur without frequent interrupt enable and disable operations. In the event the CHARACTER COUNT is greater than or equal to the CHARACTER TRIGGER value, the process proceeds to block 96 of Figure 5b to begin the transmission process.

In the event the CHARACTER COUNT is not greater than or equal to the CHARACTER TRIGGER, block 84 is utilized to determine whether or not the CHARACTER COUNT is greater than or equal to five. In the depicted embodiment of the present invention, the Applicants have determined that transmission to computer 12 should cease whenever the number of data frames within ring buffer 32 falls to the level of five frames so that the content of ring buffer 32 may be checked to determine whether or not data transmission has ceased. This is illustrated with regard to blocks 88 and 90 wherein it is determined whether or not the EMPTY FRAME value is equal to the FRAME TRIGGER level. If not, block 90 illustrates the disabling of the UART transmit interrupt signal such that transmission of data from ring buffer 32 to computer 12 is temporarily halted.

Referring again to block 84, if the CHARACTER COUNT is greater than or equal to five, then block 86 is utilized to depict a determination of whether or not the EMPTY FRAME value is equal to the FRAME TRIGGER level. If the EMPTY FRAME value is equal to the FRAME TRIGGER level, the process passes to block 96 to determine whether or not the UART is ready to transmit the data to computer 12. In this manner, the data within ring buffer 32 is continually transmitted to computer 12 until such time as the number of empty or redundant frames within ring buffer 32 indicates a cessation of data transmission has occurred. In the event that the EMPTY FRAME value is not equal to the FRAME TRIGGER level the process returns, as illustrated in block 94.

Referring again to block 88, if the EMPTY FRAME value is equal to the FRAME TRIGGER level the process proceeds to block 92 where a determination is made as to whether or not the CHARACTER COUNT is equal to zero. This investigation is utilized to determine whether or not all remaining data within ring buffer 32 has been transmitted. After all remaining data has been transmitted, the process returns as indicated in block 94. In the event that the CHARACTER COUNT is not equal to zero, the process proceeds to block 96 to begin the steps necessary to transmit the remaining data to computer 12.

Referring now in particular to Figure 5b, the process of transmission of data from ring buffer 32 to computer 12 is begun by determining whether or not UART 34 is ready to transmit. If UART 34 is not ready to transmit, the process returns, as illustrated in block 106. In the event UART 34 is ready to transmit, block 98 illustrates the taking of a character of data from the UART queue and transmitting it to the UART transmission register. Additionally, at this time, the CHARACTER COUNT within ring buffer 32 is decremented.

Next, block 99 depicts the determination of whether or not the CHARACTER COUNT is zero, indicating that no additional data is present within ring buffer 32. If no data remains, the process returns, as illustrated in block 106. Where additional data is present, block 100 is utilized to determine whether or not the UART is still ready to transmit. If so, a second character is taken from the UART queue and transmitted to the UART transmission register. The CHARACTER COUNT is also decremented at this stage. Those skilled in the art will appreciate that blocks 98 and 102 are utilized to make a determination whether or not the UART is ready for transmission at two separate stages due to the fact that a typical universal asynchronous receiver/transmitter chip utilizes a transmission register which is two deep. Therefore, it is necessary to load two characters of data into the UART prior to enabling the UART transmit empty interrupt. Thereafter, block 104 illustrates the enabling of the UART transmit empty interrupt. When this interrupt occurs, it is an indication that the UART is ready to be loaded with the next character for transmission.

In the manner depicted within Figures 5a and 5b, it should be obvious to those skilled in the art that the Applicants have disclosed a technique whereby characters or frames of data from a terminal operating at a first data rate may be temporarily stored within a ring buffer until such time as a suitable number of frames have been stored. Thereafter, a universal asynchronous receiver/transmitter is utilized to transmit these frames of data to a computer at a slightly lower data rate. The contents of the ring buffer are periodically monitored to determine whether or not the data within the ring buffer remains within acceptable levels in terms of number of frames. When the data within the ring buffer falls below a preselected level, the contents of the ring buffer are checked to determine whether or not a sufficient number of empty or redundant frames is present, indicating a cessation of data transmission. If the number of empty or redundant frames within ring buffer 32 indicates that data transmission has terminated, then the remaining frames of data within the buffer are transmitted to the computer until such time as the entire contents of the buffer are transmitted.

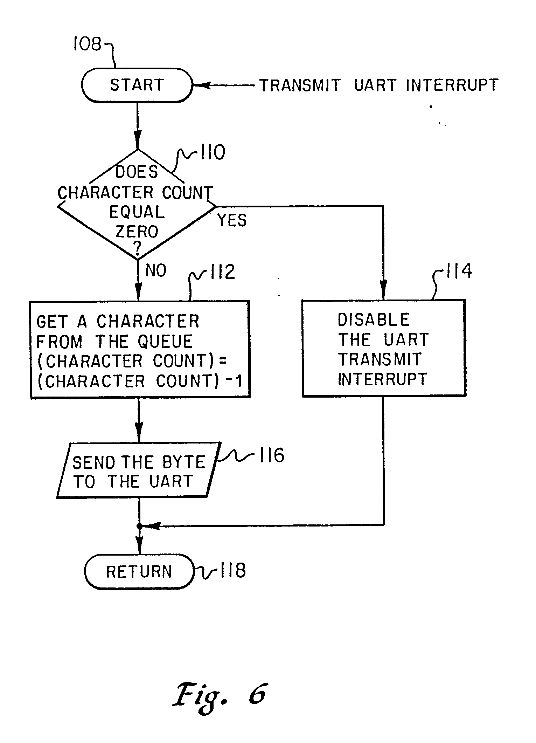

Referring now to Figure 6, there is depicted a logic flow chart illustrating the transmit interrupt method which may be utilized in accordance with the method and apparatus of the present invention. As above, the process begins at block 108 with the reception of a transmit UART interrupt signal. Next, block 110 is utilized to illustrate the determination of whether or not the CHARACTER COUNT is equal to zero, indicating that no additional data remains within ring buffer 32. If so, block 114 is utilized to depict the disabling of the UART transmit interrupt signal and the process returns, as illustrated in block 118.

If the CHARACTER COUNT does not equal zero, indicating that data for transmission still remains within ring buffer 32, block 112 illustrates the removal of a character from the data queue within ring buffer 32 and the decrementing of the CHARACTER COUNT. Next, as illustrated in block 116, the data byte is sent to the UART for transmission, and the process returns as above.

While the invention has been particularly shown and described with reference to a preferred embodiment, it will be understood by those skilled in the art that various changes in form and detail may be made therein without departing from the spirit and scope of the invention.

**Claims**

1. A method for receiving data at a first communication rate and for transmitting said data at a second communication rate, said method comprising the steps of:
receiving data at a first communication rate and storing said data;
monitoring the amount of data thus stored; and initiating transmittal of said stored data at a second communication rate in response to the presence of a selected amount of stored data.

2. A method for receiving data at a first communication rate and for transmitting said data at a second communication rate according to Claim 1 further including the step of:
halting transmittal of said stored data whenever the amount of said stored data falls below a particular amount.

3. A method for receiving data at a first communication rate and for transmitting said data at a second communication rate according to Claim 1 wherein said second communication rate is lower than said first communication rate.

4. A method for receiving data at a first communication rate and for transmitting said data at a second communication rate according to Claim 1 further including the step of:
selectively reinitiating transmittal of said stored data after the halting thereof in response to a cessation of data received at said first communication rate.

5. An apparatus for receiving data at a first communication rate and for transmitting said data at a second communication rate, said apparatus comprising:
first communication adapter means for transferring data at a first communications rate;
second communication adapter means for transferring data at a second communications rate wherein said second communications rate is lower than said first communications rate;
storage means for storing data, said storage means having an input coupled to said first communication adapter means in an output coupled to said second communication adapter means; and
control means coupled to said first communication adapter means, said second communication adapter means and said storage means for initiating the inputting of data to said storage means from said first communication adapter means and for initiating the outputting of data from said storage means to said second communication means in response to the amount of data present in said storage means exceeding a first selected amount.

6. The apparatus for receiving data at a first communication rate and for transmitting said data at a second communication rate in accordance with Claim 5 further including means for halting said outputting of data from said storage means to said second communication adapter means in response to the amount of data present in said storage means falling below a second selected amount.

7. The apparatus for receiving data at a first communication rate and for transmitting said data at a second communication rate in accordance with Claim 6 further including means for outputting remaining data from said storage means after said halting in response to a selected number of empty data frames within said storage means.

8. The apparatus for receiving data at a first communication rate and for transmitting said data at a second communication rate in accordance with Claim 5 wherein said second communication adapter means comprises a universal asynchronous receiver/transmitter.

9. The apparatus for receiving data at a first communication rate and for transmitting said data at a second communication rate in accordance with Claim 5 wherein said control means comprises an appropriately programmed Central Processing Unit.

10. The apparatus for receiving data at a first communication rate and for transmitting said data at a second communication rate in accordance with Claim 5 wherein said first communication rate comprises 80K bits per second.

11. The apparatus for receiving data at a first communication rate and for transmitting said data at a second communication rate in accordance with Claim 5 wherein said second communication rate comprises 76.8K bits per second.

EP 0 360 721 A2

Fig. 1

Fig. 2

Fig. 3

START 40

GET A COMMAND

WAS %F IN THE COMMAND LINE ? 42

YES → (HIGH SPEED) = TRUE 44

NO

(HIGH SPEED) = FALSE 46

PROCESS THE REGULAR COMMAND 48

COMMAND TO DIAL A DATA CALL ATDT<NUMBER> ? 50

NO → PROCESS THE REGULAR COMMAND

YES

SET UART AND CBX LINE RATE TO 76.8 KBAUD 52

PERFORM CALL SETUP 54

HAS THE CALL CONNECTED ? 56

YES → DISPLAY "CONNECT 76800" 60

NO

DISPLAY "NO CARRIER" 58

COMMUNICATIONS DURING DATA CONNECTION 62

HAS THE CALL DISCONNECTED ? 64

NO

YES

STOP 66

Fig. 4

Fig. 5(A)

Ⓐ

IS UART
READY TO
TRANSMIT
? — 96

NO

YES

TAKE CHARACTER FROM
THE UART
QUEUE AND SEND IT
(CHARACTER COUNT) =
(CHARACTER COUNT) - 1 — 98

DOES
(CHARACTER COUNT)
EQUAL
ZERO
? — 99

YES

NO

IS THE UART
READY TO
TRANSMIT
? — 100

NO

YES

TAKE CHARACTER FROM
QUEUE AND SEND IT
TO THE UART
(CHARACTER COUNT) =
(CHARACTER COUNT) - 1 — 102

ENABLE THE UART
INTERRUPT — 104

RETURN — 106

*Fig. 5 (B)*

Fig. 6